# EUROPEAN PATENT APPLICATION

(11) **EP 4 742 628 A1**
(43) Date of publication of application: **13.05.2026**
(21) Application number: 25212301.3
(22) Date of filing: 30.10.2025
(51) Int. Cl.: H04L 67/02, G06N 20/00, G06N 3/098

(54) **APPARATUS AND METHOD FOR INDICATING A CUSTOM OPERATION TO GROUP MEMBERS IN A WIRELESS COMMUNICATIONS SYSTEM**

(30) Priority: 08.11.2024 US 202418941786
(71) Applicant: Lenovo (United States) Inc., Morrisville, NC 27560 (US)
(72) Inventor: ATARIUS, Roozbeh, Morrisville, 27560 (US)
(74) Representative: Marks & Clerk LLP

(57) **Abstract**

Various aspects of the present disclosure relate to methods, apparatuses, and devices for wireless communication. A first network entity may be configured to, capable of, or operable to receive, from a second network entity, a request message to create a group including at least one member. The first network entity may be configured to, capable of, or operable to transmit an indication to the at least one member based at least in part on the created group. The indication includes a custom operation uniform resource indicator (URI) that is indicative of (or indicates) information associated with the at least one member of the created group. The first network entity may be configured to, capable of, or operable to transmit, to the at least one member, the custom operation URI, and transmit, to the second network entity, a response message to the request message.

## Description

### TECHNICAL FIELD

The present disclosure relates to wireless communications, and more specifically to indicating a custom operation to group members in a wireless communications system.

### BACKGROUND

A wireless communications system may include one or multiple network communication devices, which may be known as a network equipment (NE), supporting wireless communications for one or multiple user communication devices, which may be otherwise known as user equipment (UE), or other suitable terminology. The wireless communications system may support wireless communications with one or multiple user communication devices by utilizing resources of the wireless communication system (e.g., time resources (e.g., symbols, slots, subframes, frames, or the like) or frequency resources (e.g., subcarriers, carriers, or the like). Additionally, the wireless communications system may support wireless communications across various radio access technologies including third generation (3G) radio access technology, fourth generation (4G) radio access technology, fifth generation (5G) radio access technology, among other suitable radio access technologies beyond 5G (e.g., 5G-Advanced (5G-A), sixth generation (6G), etc.).

### SUMMARY

An article "a" before an element is unrestricted and understood to refer to "at least one" of those elements or "one or more" of those elements. The terms "a," "at least one," "one or more," and "at least one of one or more" may be interchangeable. As used herein, including in the claims, "or" as used in a list of items (e.g., a list of items prefaced by a phrase such as "at least one of" or "one or more of" or "one or both of") indicates an inclusive list such that, for example, a list of at least one of A, B, or C means A or B or C or AB or AC or BC or ABC (i.e., A and B and C). Also, as used herein, the phrase "based on" shall not be construed as a reference to a closed set of conditions. For example, an example step that is described as "based on condition A" may be based on both a condition A and a condition B without departing from the scope of the present disclosure. In other words, as used herein, the phrase "based on" shall be construed in the same manner as the phrase "based at least in part on. Further, as used herein, including in the claims, a "set" may include one or more elements.

Various aspects of the present disclosure relate to wireless communications, including improved network entities, processors, and methods for indicating a custom operation to group members in a wireless communications system.

A first network entity for wireless communication is described. The first network entity may be configured to, capable of, or operable to receive, from a second network entity, a request message to create a group including at least one member. The first network entity may be configured to, capable of, or operable to transmit an indication to the at least one member based at least in part on the created group. The indication includes a custom operation uniform resource indicator (URI) that is indicative of (or indicates) information associated with the at least one member of the created group. The first network entity may be configured to, capable of, or operable to transmit, to the at least one member, the custom operation URI, and transmit, to the second network entity, a response message to the request message.

A processor for wireless communication is described. The processor may be configured to, capable of, or operable to receive, from a network entity, a request message to create a group including at least one member. The processor may be configured to, capable of, or operable to transmit an indication to the at least one member based at least in part on the created group. The indication includes a custom operation URI that is indicative of (or indicates) information associated with the at least one member of the created group. The processor may be configured to, capable of, or operable to transmit, to the at least one member, the custom operation URI, and transmit, to the network entity, a response message to the request message.

A method performed or performable by a first network entity for wireless communication is described. The method may include receiving, from a second network entity, a request message to create a group including at least one member. The method may include transmitting an indication to the at least one member based at least in part on the created group. The indication includes a custom operation URI that is indicative of (or indicates) information associated with the at least one member of the created group. The method may include transmitting, to the at least one member, the custom operation URI, and transmitting, to the second network entity, a response message to the request message.

A second network entity for wireless communication is described. The second network entity may be configured to, capable of, or operable to receive, from a first network entity, a request message comprising a custom operation URI, wherein the custom operation URI is indicative of information associated with the second network entity.

A processor for wireless communication is described. The processor may be configured to, capable of, or operable to receive, from a first network entity, a request message comprising a custom operation URI, wherein the custom operation URI is indicative of information associated with a second network entity.

A method performed or performable by a second network entity for wireless communication is described. The method may include receiving, from a first network entity, a request message comprising a custom operation URI, wherein the custom operation URI is indicative of information associated with the second network entity.

### BRIEF DESCRIPTION OF THE DRAWINGS

Figure 1 illustrates an example of a wireless communications system in accordance with aspects of the present disclosure.
Figure 2 illustrates an example of a process flow diagram that supports federated learning (FL) member grouping in accordance with aspects of the present disclosure.
Figure 3 illustrates an example of a UE in accordance with aspects of the present disclosure.
Figure 4 illustrates an example of a processor in accordance with aspects of the present disclosure.
Figure 5 illustrates an example of a NE in accordance with aspects of the present disclosure.
Figure 6 illustrates a flowchart of a method performed by a NE in accordance with aspects of the present disclosure.
Figure 7 illustrates a flowchart of another method performed by a NE in accordance with aspects of the present disclosure.

### DETAILED DESCRIPTION

Some wireless communication systems, including one or more UEs, base stations, network entities, or the like may support applying (e.g., using) a custom operation for members selected to be part of a group. In some cases, operations associated with organizing a group of devices may be inefficient, such as using increased signaling overhead and power consumption. By way of example, some wireless communication systems may transmit separate messages to individual members selected to be part of a group, resulting in higher use of resources (e.g., system bandwidth) and increased power consumption.

Various aspects of the present disclosure relate to enabling one or more UEs, base stations, network entities, or the like to support improvements to indicating a custom operation to group members. In some examples, one or more UEs, base stations, network entities, or the like may be configured to use a custom operation URI to indicate information to a group of devices. Additionally, or alternatively, one or more UEs, base stations, network entities, or the like may be configured to communicate (e.g., transmit, output, indicate) the custom operation to multiple devices. By using the custom operation, one or more UEs, base stations, network entities, or the like may experience reduced power consumption, decreased processor usage, reduce data usage, and increase overall system performance.

Aspects of the present disclosure are described in the context of a wireless communications system.

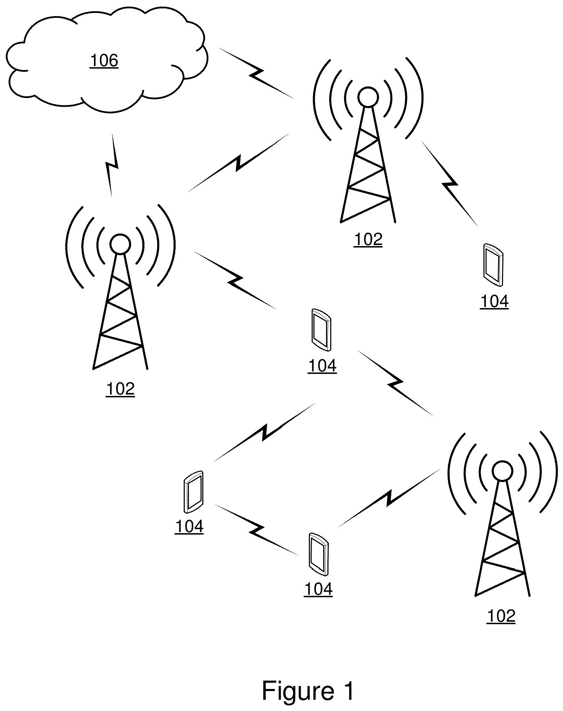

**Figure 1** illustrates an example of a wireless communications system 100 in accordance with aspects of the present disclosure. The wireless communications system 100 may include one or more NE 102, one or more UE 104, and a core network (CN) 106. The wireless communications system 100 may support various radio access technologies. In some implementations, the wireless communications system 100 may be a 4G network, such as an LTE network or an LTE-Advanced (LTE-A) network. In some other implementations, the wireless communications system 100 may be a new radio (NR) network, such as a 5G network, a 5G-Advanced (5G-A) network, or a 5G ultrawideband (5G-UWB) network. In other implementations, the wireless communications system 100 may be a combination of a 4G network and a 5G network, or other suitable radio access technology including Institute of Electrical and Electronics Engineers (IEEE) 802.11 (Wi-Fi), IEEE 802.16 (WiMAX), IEEE 802.20. The wireless communications system 100 may support radio access technologies beyond 5G, for example, 6G. Additionally, the wireless communications system 100 may support technologies, such as time division multiple access (TDMA), frequency division multiple access (FDMA), or code division multiple access (CDMA), etc.

The one or more NE 102 may be dispersed throughout a geographic region to form the wireless communications system 100. One or more of the NE 102 described herein may be or include or may be referred to as a network node, a base station, a network element, a network function, a network entity, a radio access network (RAN), a NodeB, an eNodeB (eNB), a next-generation NodeB (gNB), or other suitable terminology. An NE 102 and a UE 104 may communicate via a communication link, which may be a wireless or wired connection. For example, an NE 102 and a UE 104 may perform wireless communication (e.g., receive signaling, transmit signaling) over a Uu interface.

An NE 102 may provide a geographic coverage area for which the NE 102 may support services for one or more UEs 104 within the geographic coverage area. For example, an NE 102 and a UE 104 may support wireless communication of signals related to services (e.g., voice, video, packet data, messaging, broadcast, etc.) according to one or multiple radio access technologies. In some implementations, an NE 102 may be moveable, for example, a satellite associated with an NTN. In some implementations, different geographic coverage areas associated with the same or different radio access technologies may overlap, but the different geographic coverage areas may be associated with different NE 102.

The one or more UE 104 may be dispersed throughout a geographic region of the wireless communications system 100. A UE 104 may include or may be referred to as a remote unit, a mobile device, a wireless device, a remote device, a subscriber device, a transmitter device, a receiver device, or some other suitable terminology. In some implementations, the UE 104 may be referred to as a unit, a station, a terminal, or a client, among other examples. Additionally, or alternatively, the UE 104 may be referred to as an Internet-of-Things (IoT) device, an Internet-of-Everything (IoE) device, or machine-type communication (MTC) device, among other examples.

A UE 104 may be able to support wireless communication directly with other UEs 104 over a communication link. For example, a UE 104 may support wireless communication directly with another UE 104 over a device-to-device (D2D) communication link. In some implementations, such as vehicle-to-vehicle (V2V) deployments, vehicle-to-everything (V2X) deployments, or cellular-V2X deployments, the communication link may be referred to as a sidelink. For example, a UE 104 may support wireless communication directly with another UE 104 over a UE-to-UE interface (PC5 interface).

An NE 102 may support communications with the CN 106, or with another NE 102, or both. For example, an NE 102 may interface with other NE 102 or the CN 106 through one or more backhaul links (e.g., S1, N2, N2, or network interface). In some implementations, the NE 102 may communicate with each other directly. In some other implementations, the NE 102 may communicate with each other or indirectly (e.g., via the CN 106. In some implementations, one or more NE 102 may include subcomponents, such as an access network entity, which may be an example of an access node controller (ANC). An ANC may communicate with the one or more UEs 104 through one or more other access network transmission entities, which may be referred to as a radio heads, smart radio heads, or transmission-reception points (TRPs).

The CN 106 may support user authentication, access authorization, tracking, connectivity, and other access, routing, or mobility functions. The CN 106 may be an evolved packet core (EPC), or a 5G core (5GC), which may include a control plane entity that manages access and mobility (e.g., a mobility management entity (MME), an access and mobility management functions (AMF)) and a user plane entity that routes packets or interconnects to external networks (e.g., a serving gateway (S-GW), a Packet Data Network (PDN) gateway (P-GW), or a user plane function (UPF)). In some implementations, the control plane entity may manage non-access stratum (NAS) functions, such as mobility, authentication, and bearer management (e.g., data bearers, signal bearers, etc.) for the one or more UEs 104 served by the one or more NE 102 associated with the CN 106.

The CN 106 may communicate with a packet data network over one or more backhaul links (e.g., via an S1, N2, N2, or another network interface). The packet data network may include an application server. In some implementations, one or more UEs 104 may communicate with the application server. A UE 104 may establish a session (e.g., a protocol data unit (PDU) session, or the like) with the CN 106 via an NE 102. The CN 106 may route traffic (e.g., control information, data, and the like) between the UE 104 and the application server using the established session (e.g., the established PDU session). The PDU session may be an example of a logical connection between the UE 104 and the CN 106 (e.g., one or more network functions of the CN 106).

In the wireless communications system 100, the NEs 102 and the UEs 104 may use resources of the wireless communications system 100 (e.g., time resources (e.g., symbols, slots, subframes, frames, or the like) or frequency resources (e.g., subcarriers, carriers)) to perform various operations (e.g., wireless communications). In some implementations, the NEs 102 and the UEs 104 may support different resource structures. For example, the NEs 102 and the UEs 104 may support different frame structures. In some implementations, such as in 4G, the NEs 102 and the UEs 104 may support a single frame structure. In some other implementations, such as in 5G and among other suitable radio access technologies, the NEs 102 and the UEs 104 may support various frame structures (i.e., multiple frame structures). The NEs 102 and the UEs 104 may support various frame structures based on one or more numerologies.

One or more numerologies may be supported in the wireless communications system 100, and a numerology may include a subcarrier spacing and a cyclic prefix. A first numerology (e.g., *µ*=0) may be associated with a first subcarrier spacing (e.g., 15 kHz) and a normal cyclic prefix. In some implementations, the first numerology (e.g., *µ*=0) associated with the first subcarrier spacing (e.g., 15 kHz) may utilize one slot per subframe. A second numerology (e.g., *µ*=1) may be associated with a second subcarrier spacing (e.g., 30 kHz) and a normal cyclic prefix. A third numerology (e.g., *µ*=2) may be associated with a third subcarrier spacing (e.g., 60 kHz) and a normal cyclic prefix or an extended cyclic prefix. A fourth numerology (e.g., *µ*=3) may be associated with a fourth subcarrier spacing (e.g., 120 kHz) and a normal cyclic prefix. A fifth numerology (e.g., *µ*=4) may be associated with a fifth subcarrier spacing (e.g., 240 kHz) and a normal cyclic prefix.

A time interval of a resource (e.g., a communication resource) may be organized according to frames (also referred to as radio frames). Each frame may have a duration, for example, a 10 millisecond (ms) duration. In some implementations, each frame may include multiple subframes. For example, each frame may include 10 subframes, and each subframe may have a duration, for example, a 1 ms duration. In some implementations, each frame may have the same duration. In some implementations, each subframe of a frame may have the same duration.

Additionally or alternatively, a time interval of a resource (e.g., a communication resource) may be organized according to slots. For example, a subframe may include a number (e.g., quantity) of slots. The number of slots in each subframe may also depend on the one or more numerologies supported in the wireless communications system 100. For instance, the first, second, third, fourth, and fifth numerologies (i.e., *µ*=0, *µ*=1, *µ*=2, *µ*=3, *µ*=4) associated with respective subcarrier spacings of 15 kHz, 30 kHz, 60 kHz, 120 kHz, and 240 kHz may utilize a single slot per subframe, two slots per subframe, four slots per subframe, eight slots per subframe, and 16 slots per subframe, respectively. Each slot may include a number (e.g., quantity) of symbols (e.g., orthogonal frequency division multiplexing (OFDM) symbols). In some implementations, the number (e.g., quantity) of slots for a subframe may depend on a numerology. For a normal cyclic prefix, a slot may include 14 symbols. For an extended cyclic prefix (e.g., applicable for 60 kHz subcarrier spacing), a slot may include 12 symbols. The relationship between the number of symbols per slot, the number of slots per subframe, and the number of slots per frame for a normal cyclic prefix and an extended cyclic prefix may depend on a numerology. It should be understood that reference to a first numerology (e.g., *µ*=0) associated with a first subcarrier spacing (e.g., 15 kHz) may be used interchangeably between subframes and slots.

In the wireless communications system 100, an electromagnetic (EM) spectrum may be split, based on frequency or wavelength, into various classes, frequency bands, frequency channels, etc. By way of example, the wireless communications system 100 may support one or multiple operating frequency bands, such as frequency range designations FR1 (410 MHz - 7.125 GHz), FR2 (24.25 GHz - 52.6 GHz), FR3 (7.125 GHz - 24.25 GHz), FR4 (52.6 GHz - 114.25 GHz), FR4a or FR4-1 (52.6 GHz - 71 GHz), and FR5 (114.25 GHz - 300 GHz). In some implementations, the NEs 102 and the UEs 104 may perform wireless communications over one or more of the operating frequency bands. In some implementations, FR1 may be used by the NEs 102 and the UEs 104, among other equipment or devices for cellular communications traffic (e.g., control information, data). In some implementations, FR2 may be used by the NEs 102 and the UEs 104, among other equipment or devices for short-range, high data rate capabilities.

FR1 may be associated with one or multiple numerologies (e.g., at least three numerologies). For example, FR1 may be associated with a first numerology (e.g., *µ*=0), which includes 15 kHz subcarrier spacing; a second numerology (e.g., *µ*=1), which includes 30 kHz subcarrier spacing; and a third numerology (e.g., *µ*=2), which includes 60 kHz subcarrier spacing. FR2 may be associated with one or multiple numerologies (e.g., at least 2 numerologies). For example, FR2 may be associated with a third numerology (e.g., *µ*=2), which includes 60 kHz subcarrier spacing; and a fourth numerology (e.g., *µ*=3), which includes 120 kHz subcarrier spacing.

An artificial intelligence machine learning (AIML) enablement (AIMLE) server may be used to create a FL member group due to various reasons such as a machine learning (ML) model or application data analytics enablement (ADAE) service analytics. To create such a group, the AIMLE server may evaluate different factors to select candidate participants to configure the FL member group. Upon creation of the FL member group, the AIMLE server may indicate the candidates as the FL members that may be AIMLE clients and/or information about the group and its members.

FL group management may be described as covering an AIMLE capability to enable group management of entities serving as FL clients at an application enablement layer. The FL group management may be about creation, monitoring, and/or updating FL member groups based on AIML operations, which may be based on: an analytics event and/or service by an ADAE server (ADAES) or a vertical application layer (VAL) requirement for FL support services.

One example procedure for support for FL member grouping using AIMLE may be applicable by a specific VAL request, machine learning (ML) model identifier (ID), or ADAE analytics ID.

Preconditions for supporting FL member grouping may include: a VAL server is connected to an AIMLE server and/or a candidate and/or selected FL member is registered to the FL member registry based on a capability.

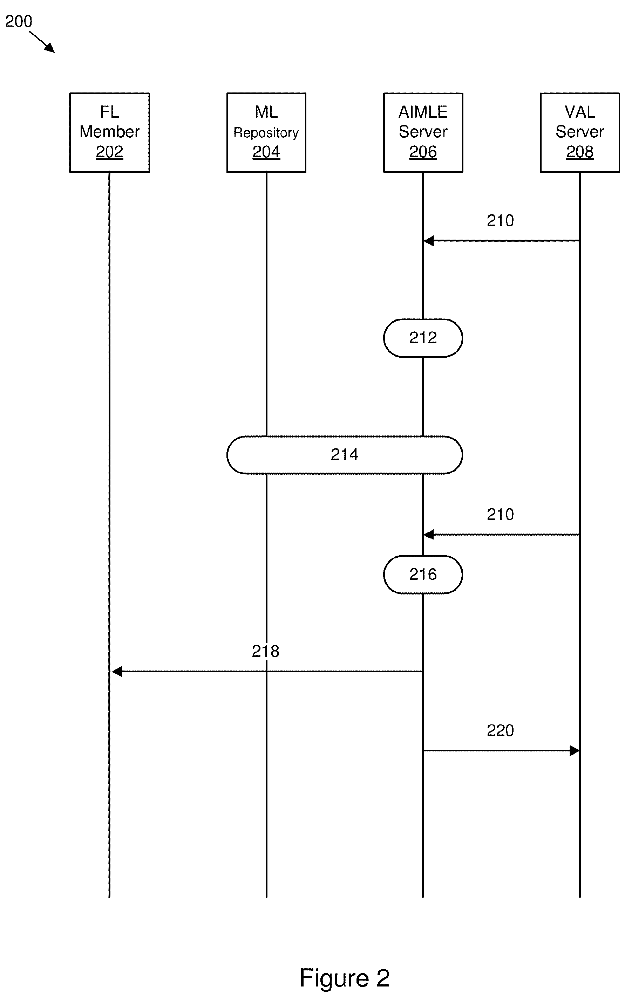

**Figure** 2 illustrates an example of a process flow diagram 200 that supports FL member grouping in accordance with aspects of the present disclosure. The process flow diagram 200 may implement various aspects of the wireless communication system 100. For example, the process flow diagram 200 may include an FL member 202, an ML repository 204, an AIMLE server 206, and a VAL server 208, which may be one or more examples of entities described herein with reference to Figure 1. In the following description of the process flow diagram 200, one or more operations or signaling performed by the FL member 202, the ML repository 204, the AIMLE server 206, and/or the VAL server 208 may be performed or signaled in a different order than the example order shown, or the one or more operations or signaling performed by the FL member 202, the ML repository 204, the AIMLE server 206, and/or the VAL server 208 may be performed or signaled at a different time than the example time shown. Some operations or signaling may also be omitted, or other operations or signaling may be added. Additionally, while the FL member 202, the ML repository 204, the AIMLE server 206, and/or the VAL server 208 are shown to perform the operations of the process flow diagram 200, some aspects of some operations may also be performed by other entities of the process flow diagram 200 or by entities that are not shown in the process flow diagram 200, or any combination thereof.

At 210, the VAL server 208 may transmit (e.g., output, send, forward), and the AIMLE server 206 may receive, a request message to support a process. In some examples, the process may include creating a group including at least one member. As such, the request message may be a request to create the group including at least one member. For example, the VAL server 208 may transmit, and the AIMLE server 206 may receive, an FL member grouping support request for supporting an FL process. In some configurations, the AIMLE server 206 may receive an FL member grouping support request from a VAL server 208 due to an ML model or ADAE service analytics.

At 212, the AIMLE server 206, based at least in part on (or in response to) the received request message, may determine at least one requirement for creating a group including one or more required (e.g., preferred, identified, selected) FL members for a corresponding ML task (e.g., an ML model training, an inference job identifier). An FL aggregator may be the same as the VAL server 208 or the AIMLE server 206, based at least in part on the request message. The at least one requirement (e.g., need) for creating an FL member group may be based at least in part on an ML task for a corresponding AIMLE service area or for a corresponding AIMLE service area, where one or more ML tasks are expected to be performed, based at least in part on the received request message. The AIMLE server 206 may evaluate different aspects, conditions, and availability to select the candidate participants to configure the FL member group.

At 214, the AIMLE server 206 may fetch (e.g., obtain, retrieve) one or more available FL members for the corresponding ML task (e.g., an ML model training, an inference job identifier) from the ML repository 204. The ML repository 204 may be a centralized or distributed storage, in which FL members or the like are stored and retrieved, for example, by the AIMLE server 206. Based on the information received by the AIMLE server 206, the AIMLE server 206 may select one or more FL members for the group for the ML task.

At 216, the AIMLE server 206 may configure the FL member group based at least in part on one or more of the available FL members or the selected FL members. A criterion or criteria for determining the FL members of the FL member group may be based at least in part on one or more capabilities of the FL members, or whether the candidate members are stationary (e.g., fixed) or dynamic (e.g., mobile) nodes and their availabilities, and/or a proximity of each member among them.

At 218, the AIMLE server 206 may transmit (e.g., notify, inform), and the (candidate) FL member 202 (e.g., including AIMLE client, if the candidate includes VAL UEs) may receive, an indication of a group identifier and an identifier of the group members for the ML model identifier and/or analytics identifier (e.g., based at least in part on the received request message at 210). Moreover, the AIMLE server 206 may indicate the candidates FL members that may be AIMLE clients and/or information about the group and its members.

At 220, the AIMLE server 206 may transmit, and the VAL server 208 may receive, a response message in response to the request message. For example, the AIMLE server 206 may transmit, and the VAL server 208 may receive, an FL member grouping support response to the VAL request indicating the group creation and the group information.

Some implementations described herein may be used to describe a federated learning service, define an API including resources and data models for the service, and/or specify an OpenAPI in Y AML format for the service.

A federated learning service may allow an AIMLE capability to enable creating, monitoring, and updating FL member groups including AIMLE clients based on AIML service operations. As AIML service operations are applicable in given service areas, due to availability of the AIMLE clients, and other aspects, the AIMLE clients may enter or leave FL member groups which may result in the AIMLE server indicating to the AIMLE clients updates for the FL member groups.

One example of a service operation defined for an AIML_FederatedLearning API is shown in Table 1.

**Table 1: Operations for a federated learning service**

| Service operation name | Description | Initiated by |
|---|---|---|
| Indicate_FL_Member_Group | This service operation is used by AIMLE server to update the FL members information on the FL member groups. | AIMLE server |

In some configurations, there may be an Indicate_FL_Member_Group. This may provide a general description of a service operation. Further, FL member information associated with an FL member group may be indicated using the indicate_FL_Member_Group service operation.

To update the FL members information associated with FL member groups, the AIMLE server may send an HTTP POST request with a Request-URI according to a pattern "{apiRoot}/aiml-fl/<apiVersion>/indicate" and with a body containing a data type IndFlMember.

Upon receipt of the HTTP POST request, the AIML client may:
a) verify the identity of the AIMLE server and determine if the AIMLE server is authorized to indicate the information on FL member groups; and
b) if the AIMLE server:
   1) is not authorized, the AIMLE client shall respond to the AIMLE server with an appropriate error status code; or
   2) is authorized, the AIMLE client:
      i) shall respond to the AIMLE server with an HTTP "204 No Content" status code; and
      ii) shall process and provision the HTTP POST request.

AIML_FederatedLearning may use an AIML_FederatedLearning API. The API URI of the AIML_FederatedLearning API may be: {apiroot}/<apiName>/<apiVersion>.

Request URIs used in HTTP requests may have a Resource URI structure as follows: {apiRoot}/<apiName>/<apiVersion>/<apiSpecificSuffixes>, with the following components: the {apiRoot} may be set, the <apiName> may be "aiml-fl", the <apiVersion> may be "v1", and/or the <apiSpecificSuffixes> may be set. In certain configurations, the service producer (e.g., <NF or Entity, e.g. UAE Server>) takes the role of the SCEF and the service consumer (e.g., <provide examples of service consumers>) takes the role of the SCS/AS.

There may be neither resources nor methods used for a service. There may also be custom operations without associated resources. The structure of one custom operation URI of an AIML_FederatedLearning API is shown in Table 2.

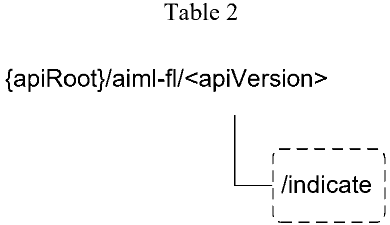

Table 3 provides an overview of custom operations and applicable HTTP methods defined for the AIML_FederatedLearning API.

**Table 3: Custom operations without associated resources**

| Custom operation URI | Mapped HTTP method | Description |
|---|---|---|
| /indicate | POST | Indicates FL member information on FL member group |

One custom operation for an AIML server to indicate an AIML client as an FL member and/or information associated with an FL member group may support a custom operation URI "/indicate" as shown in Table 3.

This custom operation may support response data structures and response codes found in Tables 4 through 7.

**Table 4: Data structures supported by the POST Request Body on this resource**

| Data type | P | Cardinality | Description |
|---|---|---|---|
| IndFlMember | M | 1 | Information which shall be indicated to the FL members. |

**Table 5: Data structures supported by the POST Response Body on this resource**

| Data type | P | Cardinality | Response codes | Description |
|---|---|---|---|---|
| n/a | M | 1 | 204 No Content | Success. The indicated information on FL member group is successfully received, processed, and provisioned. |
| n/a | | | 307 Temporary Redirect | Temporary redirection. The response shall include a Location header field containing an alternative URI of the resource located in an alternative AIMLE client. |
| | | | | Redirection handling may be described. |
| n/a | | | 308 Permanent Redirect | Permanent redirection. The response shall include a Location header field containing an alternative URI of the resource located in an alternative AIMLE client. |
| | | | | Redirection handling may be described. |

**Table 6: Headers supported by the 307 Response Code on this resource**

| Name | Data type | P | Cardinality | Description |
|---|---|---|---|---|
| Location | string | M | 1 | Contains an alternative target URI located in an alternative AIMLE client. |

**Table 7: Headers supported by the 308 Response Code on this resource**

| Name | Data type | P | Cardinality | Description |
|---|---|---|---|---|
| Location | string | M | 1 | Contains an alternative target URI located in an alternative AIMLE client. |

There may be an application data model supported by an API.

Table 8 specifies data types defined for the AIML_FederatedLearning API.

**Table 8: AIML_FederatedLearning API specific Data Types**

| Data type | Description | Applicability |
|---|---|---|
| IndFlMember | Indicates the FL member the information on FL member group | |
| FlMemberType | Identifier of the FL group | |
| ValUeInfo | Information on the FL member | |

Table 9 specifies data types re-used by the AIML_FederatedLearning API.

**Table 9: AIML_FederatedLearning API re-used Data Types**

| Data type | Comments | Applicability |
|---|---|---|
| ValUeAddrInfo | Represents VAL UE address information. | |

A structured data type clause may define structures to be used in resource representations.

Table 10 corresponds to an IndFlMember.

**Table 10: Definition of type IndFlMember**

| Attribute name | Data type | P | Cardinalit y | Description | Applicability |
|---|---|---|---|---|---|
| serverId | string | M | 1 | Identifier of the indicating AIMLE server | |
| valServiceId | string | C | 0..1 | Identifier of the VAL service for which the grouping indication is applied. (NOTE) | |
| mlModelId | string | C | 0..1 | Identifier of the ML model for which the indication is applied. (NOTE) | |
| analyticsId | string | C | 0..1 | Identifier of the ADAE service analytics, the FL grouping is based on, if the FL process is used for that ADAE service analytics. (NOTE) | |
| flGroupId | FlMemberTy pe | M | 1..N | Identifier of the AIMLE created FL group for the FL process | |
| NOTE: One of the attributes valServiceId, mlModelId, or analyticsId may be present. | | | | | |

Table 11 corresponds to an FlMemberType.

**Table 11: Definition of type FlMemberType**

| Attribute name | Data type | P | Cardinality | Description | Applicability |
|---|---|---|---|---|---|
| flMemberID | string | O | 0..1 | Identifier of FL members | |
| flMemberAdd r | ValUeAddrI nfo | O | 0..1 | Address information of FL member | |
| flMemberInfo | ValUeInfo | O | 0..1 | Information on FL members | |

There may be simple data types and enumerations that can be referenced from data structures.

Table 12 corresponds to simple data types.

**Table 12: Simple data types**

| Type Name | Type Definition | Description | Applicability |
|---|---|---|---|
| | | | |

The enumeration ValUeInfo may represent information regarding availability, constraint, and role of a VAL UE as detailed in Table 13.

**Table 13: Enumeration ValUeInfo**

| Enumeration value | Description | Applicability |
|---|---|---|
| AVAILABILITY | Indicates the availability of the VAL UE | |
| CONSTRAINT | Indicates the constraint of the VAL UE | |
| ROLE | Indicates the role and type of the VAL UE | |

There may be no data types describing alternative data types or combination of data types for the AIML_FederatedLearning API.

There may be binary data types as detailed in Table 14.

**Table 14: Binary Data Types**

| Name | Clause defined | Content type |
|---|---|---|
| | | |

For the AIML_FederatedLearning API, HTTP error responses may be supported. Protocol errors and application errors may be supported for the HTTP status codes.

There may be no specific procedures for the AIML_FederatedLearning API.

Application errors defined for the AIML_FederatedLearning API are listed in Table 15.

**Table 15: Application errors**

| Application Error | HTTP status code | Description |
|---|---|---|
| | | |

There may be optional features as shown in Table 16 defined for the AIML_FederatedLearning API. They may be negotiated using an extensibility mechanism.

**Table 16: Supported Features**

| Feature number | Feature Name | Description |
|---|---|---|
| | | |

In one example, the AIML_FederatedLearning API may be as follows:

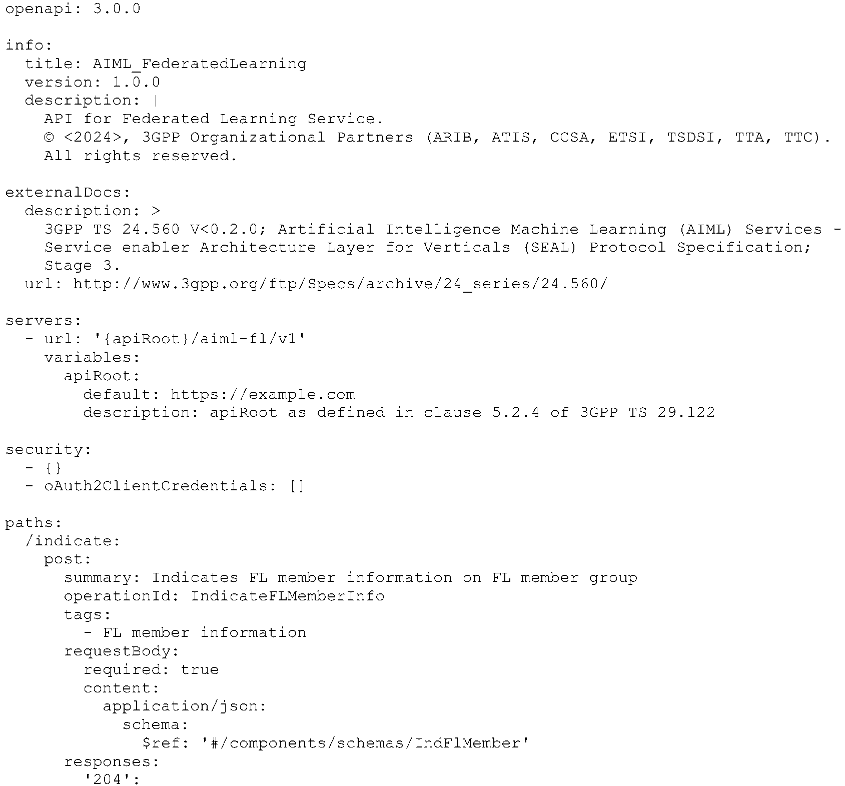

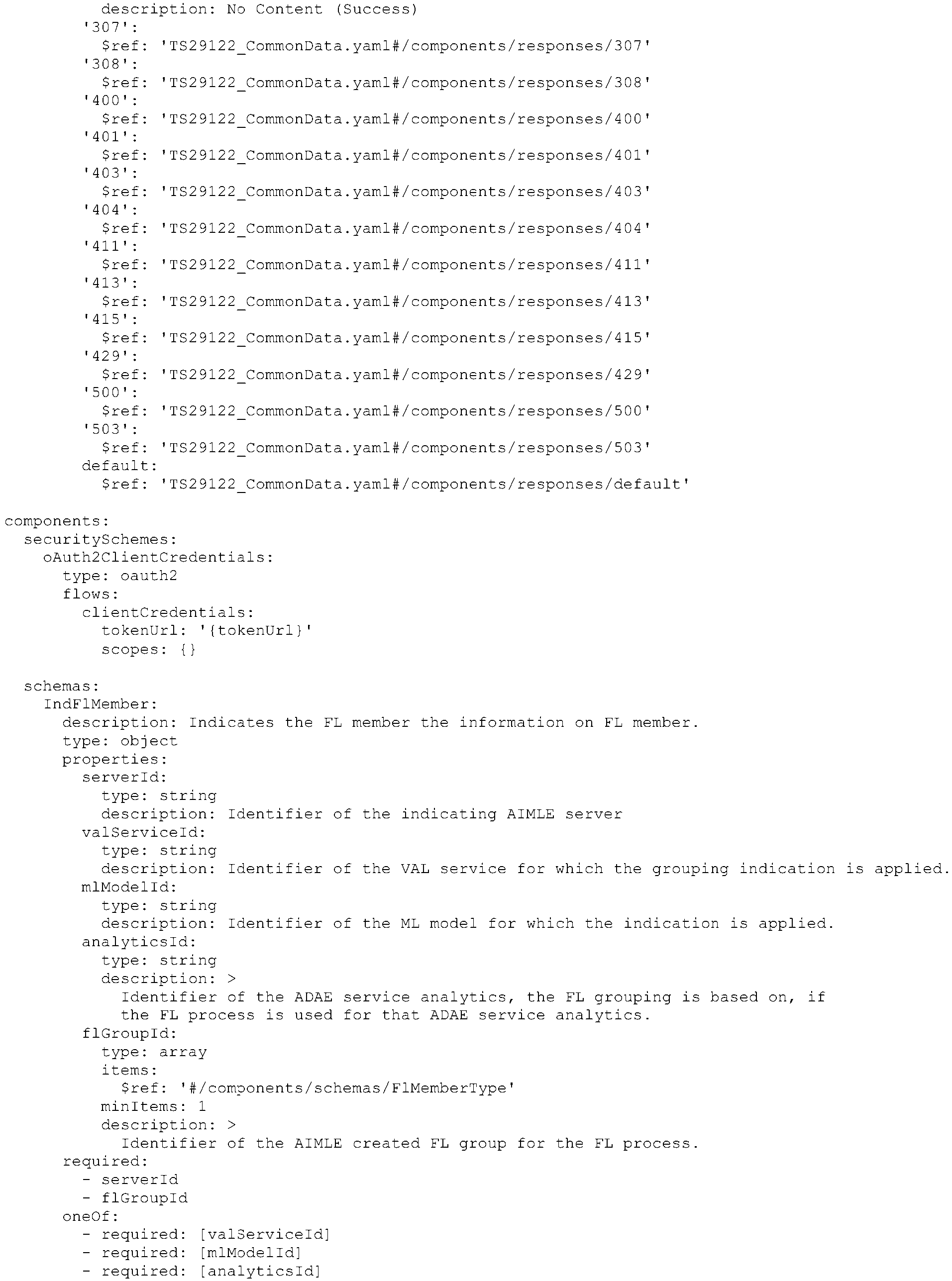

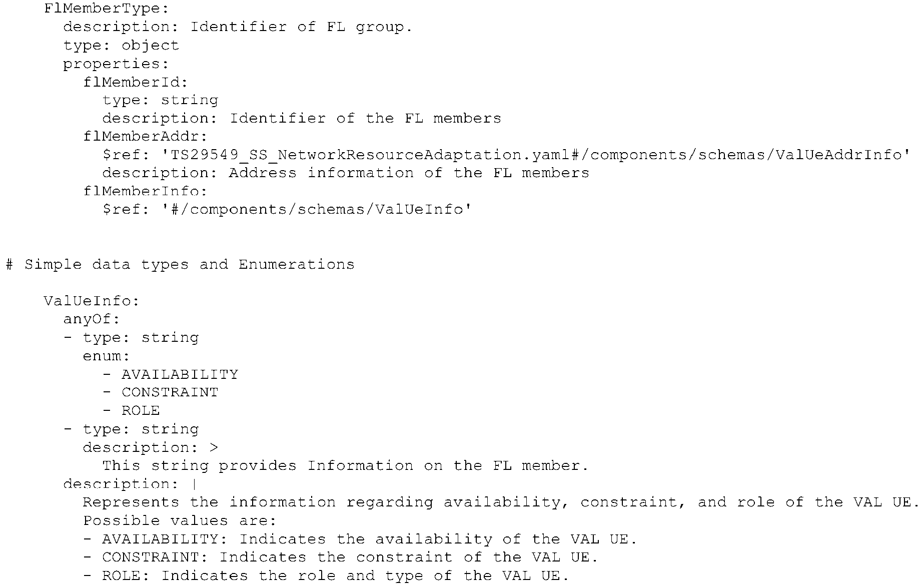

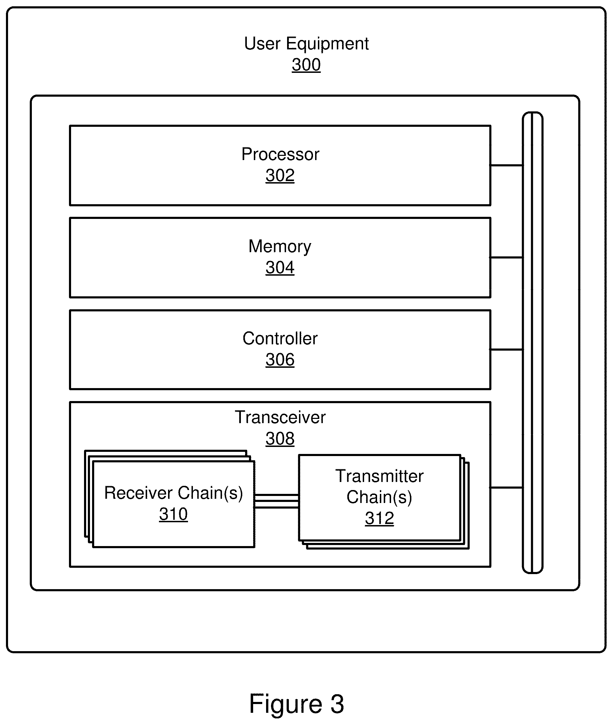

**Figure** 3 illustrates an example of a UE 300 in accordance with aspects of the present disclosure. The UE 300 may include a processor 302, a memory 304, a controller 306, and a transceiver 308. The processor 302, the memory 304, the controller 306, or the transceiver 308, or various combinations thereof or various components thereof may be examples of means for performing various aspects of the present disclosure as described herein. These components may be coupled (e.g., operatively, communicatively, functionally, electronically, electrically) via one or more interfaces.

The processor 302, the memory 304, the controller 306, or the transceiver 308, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 302 may include an intelligent hardware device (e.g., a general-purpose processor, a DSP, a CPU, an ASIC, a field programmable gate array (FPGA), or any combination thereof). In some implementations, the processor 302 may be configured to operate the memory 304. In some other implementations, the memory 304 may be integrated into the processor 302. The processor 302 may be configured to execute computer-readable instructions stored in the memory 304 to cause the UE 300 to perform various functions of the present disclosure.

The memory 304 may include volatile or non-volatile memory. The memory 304 may store computer-readable, computer-executable code including instructions when executed by the processor 302 cause the UE 300 to perform various functions described herein. The code may be stored in a non-transitory computer-readable medium such the memory 304 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 302 and the memory 304 coupled with the processor 302 may be configured to cause the UE 300 to perform one or more of the functions described herein (e.g., executing, by the processor 302, instructions stored in the memory 304). For example, the processor 302 may support wireless communication at the UE 300 in accordance with examples as disclosed herein. For example, the processor 302 coupled with the memory 304 may be configured to cause the UE 300 to perform various actions described herein.

The controller 306 may manage input and output signals for the UE 300. The controller 306 may also manage peripherals not integrated into the UE 300. In some implementations, the controller 306 may utilize an operating system such as iOS^{®}, ANDROID^{®}, WINDOWS^{®}, or other operating systems. In some implementations, the controller 306 may be implemented as part of the processor 302.

In some implementations, the UE 300 may include at least one transceiver 308. In some other implementations, the UE 300 may have more than one transceiver 308. The transceiver 308 may represent a wireless transceiver. The transceiver 308 may include one or more receiver chains 310, one or more transmitter chains 312, or a combination thereof.

A receiver chain 310 may be configured to receive signals (e.g., control information, data, packets) over a wireless medium. For example, the receiver chain 310 may include one or more antennas for receive the signal over the air or wireless medium. The receiver chain 310 may include at least one amplifier (e.g., a low-noise amplifier (LNA)) configured to amplify the received signal. The receiver chain 310 may include at least one demodulator configured to demodulate the receive signal and obtain the transmitted data by reversing the modulation technique applied during transmission of the signal. The receiver chain 310 may include at least one decoder for decoding the processing the demodulated signal to receive the transmitted data.

A transmitter chain 312 may be configured to generate and transmit signals (e.g., control information, data, packets). The transmitter chain 312 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 312 may also include at least one power amplifier configured to amplify the modulated signal to an appropriate power level suitable for transmission over the wireless medium. The transmitter chain 312 may also include one or more antennas for transmitting the amplified signal into the air or wireless medium.

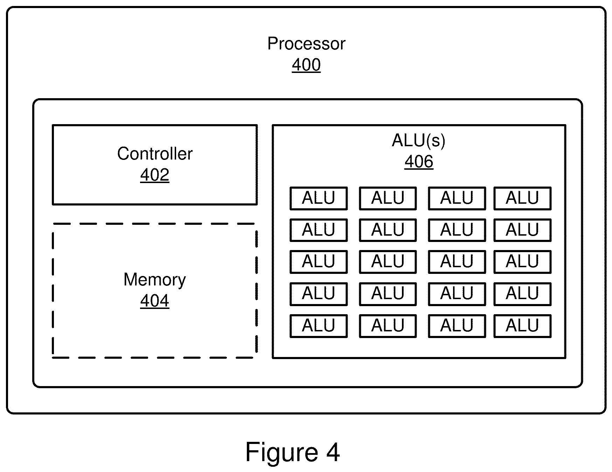

**Figure 4** illustrates an example of a processor 400 in accordance with aspects of the present disclosure. The processor 400 may be an example of a processor configured to perform various operations in accordance with examples as described herein. The processor 400 may include a controller 402 configured to perform various operations in accordance with examples as described herein. The processor 400 may optionally include at least one memory 404, which may be, for example, an L1/L2/L3 cache. Additionally, or alternatively, the processor 400 may optionally include one or more arithmetic-logic units (ALUs) 406. One or more of these components may be in electronic communication or otherwise coupled (e.g., operatively, communicatively, functionally, electronically, electrically) via one or more interfaces (e.g., buses).

The processor 400 may be a processor chipset and include a protocol stack (e.g., a software stack) executed by the processor chipset to perform various operations (e.g., receiving, obtaining, retrieving, transmitting, outputting, forwarding, storing, determining, identifying, accessing, writing, reading) in accordance with examples as described herein. The processor chipset may include one or more cores, one or more caches (e.g., memory local to or included in the processor chipset (e.g., the processor 400) or other memory (e.g., random access memory (RAM), read-only memory (ROM), dynamic RAM (DRAM), synchronous dynamic RAM (SDRAM), static RAM (SRAM), ferroelectric RAM (FeRAM), magnetic RAM (MRAM), resistive RAM (RRAM), flash memory, phase change memory (PCM), and others).

The controller 402 may be configured to manage and coordinate various operations (e.g., signaling, receiving, obtaining, retrieving, transmitting, outputting, forwarding, storing, determining, identifying, accessing, writing, reading) of the processor 400 to cause the processor 400 to support various operations in accordance with examples as described herein. For example, the controller 402 may operate as a control unit of the processor 400, generating control signals that manage the operation of various components of the processor 400. These control signals include enabling or disabling functional units, selecting data paths, initiating memory access, and coordinating timing of operations.

The controller 402 may be configured to fetch (e.g., obtain, retrieve, receive) instructions from the memory 404 and determine subsequent instruction(s) to be executed to cause the processor 400 to support various operations in accordance with examples as described herein. The controller 402 may be configured to track memory address of instructions associated with the memory 404. The controller 402 may be configured to decode instructions to determine the operation to be performed and the operands involved. For example, the controller 402 may be configured to interpret the instruction and determine control signals to be output to other components of the processor 400 to cause the processor 400 to support various operations in accordance with examples as described herein. Additionally, or alternatively, the controller 402 may be configured to manage flow of data within the processor 400. The controller 402 may be configured to control transfer of data between registers, arithmetic logic units (ALUs), and other functional units of the processor 400.

The memory 404 may include one or more caches (e.g., memory local to or included in the processor 400 or other memory, such RAM, ROM, DRAM, SDRAM, SRAM, MRAM, flash memory, etc. In some implementations, the memory 404 may reside within or on a processor chipset (e.g., local to the processor 400). In some other implementations, the memory 404 may reside external to the processor chipset (e.g., remote to the processor 400).

The memory 404 may store computer-readable, computer-executable code including instructions that, when executed by the processor 400, cause the processor 400 to perform various functions described herein. The code may be stored in a non-transitory computer-readable medium such as system memory or another type of memory. The controller 402 and/or the processor 400 may be configured to execute computer-readable instructions stored in the memory 404 to cause the processor 400 to perform various functions. For example, the processor 400 and/or the controller 402 may be coupled with or to the memory 404, the processor 400, the controller 402, and the memory 404 may be configured to perform various functions described herein. In some examples, the processor 400 may include multiple processors and the memory 404 may include multiple memories. One or more of the multiple processors may be coupled with one or more of the multiple memories, which may, individually or collectively, be configured to perform various functions herein.

The one or more ALUs 406 may be configured to support various operations in accordance with examples as described herein. In some implementations, the one or more ALUs 406 may reside within or on a processor chipset (e.g., the processor 400). In some other implementations, the one or more ALUs 406 may reside external to the processor chipset (e.g., the processor 400). One or more ALUs 406 may perform one or more computations such as addition, subtraction, multiplication, and division on data. For example, one or more ALUs 406 may receive input operands and an operation code, which determines an operation to be executed. One or more ALUs 406 be configured with a variety of logical and arithmetic circuits, including adders, subtractors, shifters, and logic gates, to process and manipulate the data according to the operation. Additionally, or alternatively, the one or more ALUs 406 may support logical operations such as AND, OR, exclusive-OR (XOR), not-OR (NOR), and not-AND (NAND), enabling the one or more ALUs 406 to handle conditional operations, comparisons, and bitwise operations.

The processor 400 may support wireless communication in accordance with examples as disclosed herein. The processor 400 may be configured to or operable to support a means for performing various operations described herein. For example, the processor 400 may be configured to, capable of, or operable to: receive, from an NE, a request message to create a group including at least one member; transmit an indication to the at least one member based at least in part on the created group, wherein the indication comprises a custom operation URI that is indicative of information associated with the at least one member of the created group; transmit, to the at least one member of the created group, the custom operation URI; and transmit, to the network entity, a response message to the request message. Additionally, or alternatively, the processor 400 may be configured to, capable of, or operable to receive, from a first NE, a request message including a custom operation URI, wherein the custom operation URI is indicative of indicates information associated with a second NE NE.

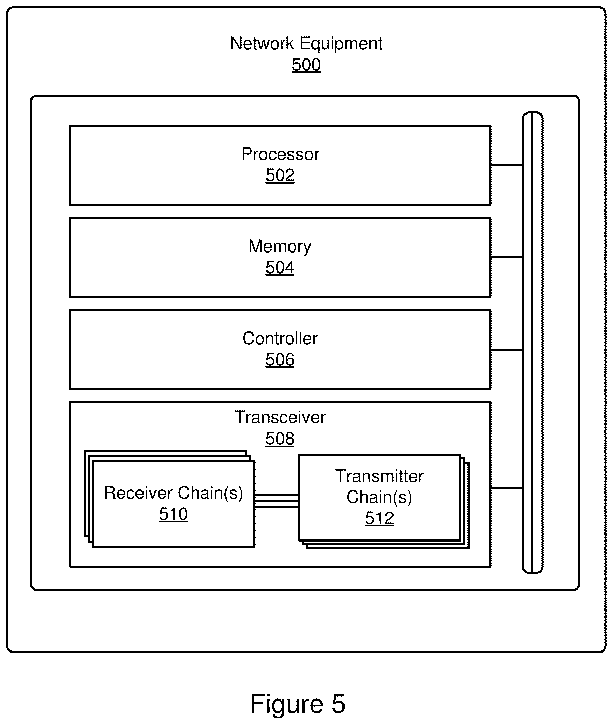

**Figure 5** illustrates an example of a NE 500 in accordance with aspects of the present disclosure. The NE 500 may include a processor 502, a memory 504, a controller 506, and a transceiver 508. The processor 502, the memory 504, the controller 506, or the transceiver 508, or various combinations thereof or various components thereof may be examples of means for performing various aspects of the present disclosure as described herein. These components may be coupled (e.g., operatively, communicatively, functionally, electronically, electrically) via one or more interfaces.

The processor 502, the memory 504, the controller 506, or the transceiver 508, or various combinations or components thereof may be implemented in hardware (e.g., circuitry). The hardware may include a processor, a digital signal processor (DSP), an application-specific integrated circuit (ASIC), or other programmable logic device, or any combination thereof configured as or otherwise supporting a means for performing the functions described in the present disclosure.

The processor 502 may include an intelligent hardware device (e.g., a general-purpose processor, a DSP, a CPU, an ASIC, an FPGA, or any combination thereof). In some implementations, the processor 502 may be configured to operate the memory 504. In some other implementations, the memory 504 may be integrated into the processor 502. The processor 502 may be configured to execute computer-readable instructions stored in the memory 504 to cause the NE 500 to perform various functions of the present disclosure. For example, the processor 502 coupled with the memory 504 may be configured to cause the NE 500 (e.g., a first NE) to: receive, from a second NE, a request message to create a group including at least one member; transmit an indication to the at least one member based at least in part on the created group, wherein the indication comprises a custom operation URI that is indicative of information associated with the at least one member of the created group; transmit, to the at least one member of the created group, the custom operation URI; and transmit, to the second network entity, a response message to the request message. Additionally, or alternatively, the processor 502 coupled with the memory 504 may be configured to cause the NE 500 to receive, from a first NE, a request message including a custom operation URI, wherein the custom operation URI is indicative of indicates information associated with the NE 500.

In some implementations, the custom operation URI includes a mapped HTTP POST request. In some implementations, the custom operation URI indicates one or more of: an identifier of the group, an identifier the at least one member of the group, or a cause for creating the group.

In some implementations, the first NE may be an AIMLE server, and the second NE may be an AIML server or a VAL server. In some implementations, the at least one member of the created group is selected for an AI/ML task.

In some implementations, the request message includes a request to support a process. In some implementations, the process may include one or more operations, actions, tasks, or the like. In some implementations, the process comprises creating the group with one or more members. In some implementations, the group is created based at least in part on the request to support the process. In some implementations, the processor 502 coupled with the memory 504 may be configured to cause the NE 500 (e.g., a first NE) to evaluate the process and at least one requirement for selecting one or more members for the group. In some implementations, the group is created based at least in part on the evaluated process and the evaluated at least one requirement.

In some implementations, the indication comprises an API URI. In some implementations, the API URI comprises an API root, an API name, and an API version.

The memory 504 may include volatile or non-volatile memory. The memory 504 may store computer-readable, computer-executable code including instructions when executed by the processor 502 cause the NE 500 to perform various functions described herein. The code may be stored in a non-transitory computer-readable medium such the memory 504 or another type of memory. Computer-readable media includes both non-transitory computer storage media and communication media including any medium that facilitates transfer of a computer program from one place to another. A non-transitory storage medium may be any available medium that may be accessed by a general-purpose or special-purpose computer.

In some implementations, the processor 502 and the memory 504 coupled with the processor 502 may be configured to cause the NE 500 to perform one or more of the functions described herein (e.g., executing, by the processor 502, instructions stored in the memory 504). For example, the processor 502 may support wireless communication at the NE 500 in accordance with examples as disclosed herein.

The controller 506 may manage input and output signals for the NE 500. The controller 506 may also manage peripherals not integrated into the NE 500. In some implementations, the controller 506 may utilize an operating system such as iOS^{®}, ANDROID^{®}, WINDOWS^{®}, or other operating systems. In some implementations, the controller 506 may be implemented as part of the processor 502.

In some implementations, the NE 500 may include at least one transceiver 508. In some other implementations, the NE 500 may have more than one transceiver 508. The transceiver 508 may represent a wireless transceiver. The transceiver 508 may include one or more receiver chains 510, one or more transmitter chains 512, or a combination thereof.

A receiver chain 510 may be configured to receive signals (e.g., control information, data, packets) over a wireless medium. For example, the receiver chain 510 may include one or more antennas for receive the signal over the air or wireless medium. The receiver chain 510 may include at least one amplifier (e.g., a low-noise amplifier (LNA)) configured to amplify the received signal. The receiver chain 510 may include at least one demodulator configured to demodulate the receive signal and obtain the transmitted data by reversing the modulation technique applied during transmission of the signal. The receiver chain 510 may include at least one decoder for decoding the processing the demodulated signal to receive the transmitted data.

A transmitter chain 512 may be configured to generate and transmit signals (e.g., control information, data, packets). The transmitter chain 512 may include at least one modulator for modulating data onto a carrier signal, preparing the signal for transmission over a wireless medium. The at least one modulator may be configured to support one or more techniques such as amplitude modulation (AM), frequency modulation (FM), or digital modulation schemes like phase-shift keying (PSK) or quadrature amplitude modulation (QAM). The transmitter chain 512 may also include at least one power amplifier configured to amplify the modulated signal to an appropriate power level suitable for transmission over the wireless medium. The transmitter chain 512 may also include one or more antennas for transmitting the amplified signal into the air or wireless medium.

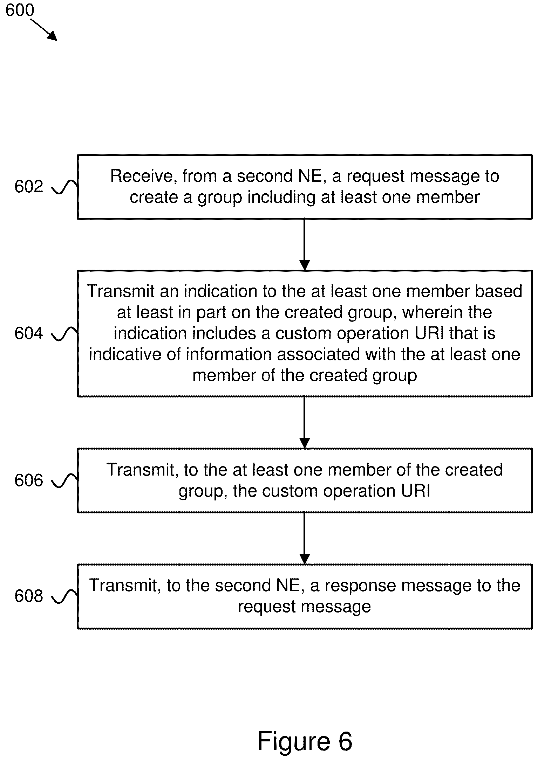

**Figure 6** illustrates a flowchart of a method 600 in accordance with aspects of the present disclosure. The operations of the method 600 may be implemented by a first NE (e.g., an AIML server, a VAL server) as described herein. In some implementations, the first NE may execute a set of instructions to control the function elements of a processor to perform the described functions. It should be noted that the method described herein describes a possible implementation, and that the operations and the steps may be rearranged or otherwise modified and that other implementations are possible.

At 602, the method may include receiving, from a second NE, a request message to create a group including at least one member. The operations of 602 may be performed in accordance with examples as described herein. In some implementations, aspects of the operations of 602 may be performed by a NE as described with reference to Figure 5.

At 604, the method may include transmitting an indication to the at least one member based at least in part on the created group, wherein the indication includes a custom operation URI that is indicative of information associated with the at least one member of the created group. The operations of 604 may be performed in accordance with examples as described herein. In some implementations, aspects of the operations of 604 may be performed by a NE as described with reference to Figure 5.

At 606, the method may include transmitting, to the at least one member of the created group, the custom operation URI. The operations of 606 may be performed in accordance with examples as described herein. In some implementations, aspects of the operations of 606 may be performed by a NE as described with reference to Figure 5.

At 608, the method may include transmitting, to the second NE, a response message to the request message. The operations of 608 may be performed in accordance with examples as described herein. In some implementations, aspects of the operations of 608 may be performed by a NE as described with reference to Figure 5.

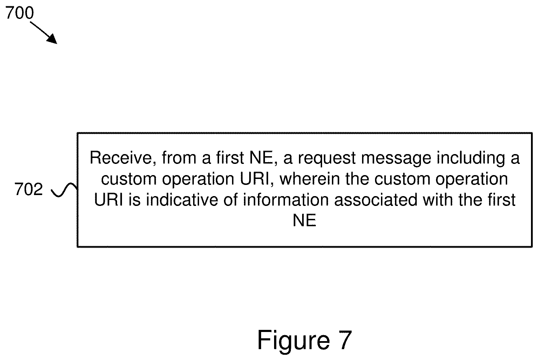

**Figure 7** illustrates a flowchart of another method 700 in accordance with aspects of the present disclosure. The operations of the method 700 may be implemented by a second NE (e.g., an AIML server, a VAL server) as described herein. In some implementations, the second NE may execute a set of instructions to control the function elements of a processor to perform the described functions. It should be noted that the method described herein describes a possible implementation, and that the operations and the steps may be rearranged or otherwise modified and that other implementations are possible.

At 702, the method may include receiving, from a first NE, a request message including a custom operation URI, wherein the custom operation URI is indicative of information associated with the first NE. The operations of 702 may be performed in accordance with examples as described herein. In some implementations, aspects of the operations of 702 may be performed by a NE as described with reference to Figure 5.

It should be noted that the methods described herein describe possible implementations, and that the operations and the steps may be rearranged or otherwise modified and that other implementations are possible.

The description herein is provided to enable a person having ordinary skill in the art to make or use the disclosure. Various modifications to the disclosure will be apparent to a person having ordinary skill in the art, and the generic principles defined herein may be applied to other variations without departing from the scope of the disclosure. Thus, the disclosure is not limited to the examples and designs described herein but is to be accorded the broadest scope consistent with the principles and novel features disclosed herein.

Aspects of the present disclosure can be defined by the following numbered clauses:
1. A first network entity, comprising:
   at least one memory; and
   at least one processor coupled with the at least one memory and configured to cause the first network entity to:
      receive, from a second network entity, a request message to create a group comprising at least one member;
      transmit an indication to the at least one member based at least in part on the created group, wherein the indication comprises a custom operation uniform resource identifier (URI) that is indicative of information associated with the at least one member of the created group;
      transmit, to the at least one member of the created group, the custom operation URI; and
      transmit, to the second network entity, a response message based at least in part on the request message.
2. The first network entity of clause 1, wherein the custom operation URI comprises a mapped hypertext transfer protocol (HTTP) POST request.
3. The first network entity of clause 1, wherein the custom operation URI indicates one or more of: an identifier of the group, an identifier the at least one member of the group, or a cause for creating the group.
4. The first network entity of any preceding clause, wherein:
   the first network entity comprises an artificial intelligence/machine learning (AI/ML) enablement (AIMLE) server; and
   the second network entity comprises an AIML server or a vertical application layer (VAL) server.
5. The first network entity of any preceding clause, wherein the at least one member of the created group is selected for an artificial intelligence/machine learning (AI/ML) task.
6. The first network entity of any preceding clause, wherein:
   the request message includes a request to support a process,
   the process comprises creating the group with one or more members, and
   the group is created based at least in part on the request to support the process.
7. The first network entity of clause 6, wherein the at least one processor is further configured to cause the first network entity to:
   evaluate the process and at least one requirement for selecting one or more members for the group,
   wherein the group is created based at least in part on the evaluated process and the evaluated at least one requirement.
8. The first network entity of any preceding clause, wherein the indication comprises an application programming interface (API) URI, and wherein the API URI comprises an API root, an API name, and an API version.
9. A processor for wireless communication, comprising:
   at least one controller coupled with at least one memory and configured to cause the processor to:
   receive, from a network entity, a request message to create a group comprising at least one member;
   transmit an indication to the at least one member based at least in part on the created group, wherein the indication comprises a custom operation uniform resource indicator (URI) that is indicative of information associated with the at least one member of the created group;
   transmit, to the at least one member of the created group, the custom operation URI; and
   transmit, to the network entity, a response message to the request message.
10. The processor of clause 9, wherein the custom operation URI comprises a mapped hypertext transfer protocol (HTTP) POST request.
11. The processor of clause 9, wherein the custom operation URI comprises one or more of an identifier of the group, an identifier of the at least one member of the group, or a cause for creating the group.
12. The processor of any of clauses 9 to 11, wherein the network entity comprises an AIML server or a vertical application layer (VAL) server.
13. The processor of any of clauses 9 to 12, wherein the at least one member of the created group is selected for an artificial intelligence/machine learning (AI/ML) task.
14. A method performed by a first network entity, the method comprising:
   receiving, from a second network entity, a request message to create a group comprising at least one member;
   transmitting an indication to the at least one member based at least in part on the created group, wherein the indication comprises a custom operation uniform resource indicator (URI) that is indicative of information associated with the at least one member of the created group;
   transmitting, to the at least one member of the group, the custom operation URI; and
   transmitting, to the second network entity, a response message to the request message.
15. The method of clause 14, wherein the custom operation URI comprises a mapped hypertext transfer protocol (HTTP) POST request.
16. The method of clause 14, wherein the custom operation URI comprises one or more of an identifier of the group, an identifier of the at least one member of the group, or a cause for creating the group.
17. The method of any of clauses 14 to 16, wherein:
   the first network entity comprises an artificial intelligence/machine learning (AI/ML) enablement (AIMLE) server; and
   the second network entity comprises an AIML server or a vertical application layer (VAL) server.
18. The method of any of clauses 14 to 17, wherein the at least one member of the group is selected for an artificial intelligence/machine learning (AI/ML) task.
19. A second network entity, comprising:
   at least one memory; and
   at least one processor coupled with the at least one memory and configured to cause the second network entity to:
      receive, from a first network entity, a request message comprising a custom operation uniform resource identifier (URI), wherein the custom operation URI is indicative of information associated with the second network entity.
20. The second network entity of clause 19, wherein the custom operation URI comprises a mapped hypertext transfer protocol (HTTP) POST request.

## Claims

1. A first network entity, comprising:
at least one memory; and
at least one processor coupled with the at least one memory and configured to cause the first network entity to:
receive, from a second network entity, a request message to create a group comprising at least one member;
transmit an indication to the at least one member based at least in part on the created group, wherein the indication comprises a custom operation uniform resource identifier (URI) that is indicative of information associated with the at least one member of the created group;
transmit, to the at least one member of the created group, the custom operation URI; and
transmit, to the second network entity, a response message based at least in part on the request message.

2. The first network entity of claim 1, wherein the custom operation URI comprises a mapped hypertext transfer protocol (HTTP) POST request.

3. The first network entity of claim 1, wherein the custom operation URI indicates one or more of: an identifier of the group, an identifier the at least one member of the group, or a cause for creating the group.

4. The first network entity of any preceding claim, wherein:
the first network entity comprises an artificial intelligence/machine learning (AI/ML) enablement (AIMLE) server; and
the second network entity comprises an AIML server or a vertical application layer (VAL) server.

5. The first network entity of any preceding claim, wherein the at least one member of the created group is selected for an artificial intelligence/machine learning (AI/ML) task.

6. The first network entity of any preceding claim, wherein:
the request message includes a request to support a process,
the process comprises creating the group with one or more members, and
the group is created based at least in part on the request to support the process.

7. The first network entity of claim 6, wherein the at least one processor is further configured to cause the first network entity to:
evaluate the process and at least one requirement for selecting one or more members for the group,
wherein the group is created based at least in part on the evaluated process and the evaluated at least one requirement.

8. The first network entity of any preceding claim, wherein the indication comprises an application programming interface (API) URI, and wherein the API URI comprises an API root, an API name, and an API version.

9. A method performed by a first network entity, the method comprising:
receiving, from a second network entity, a request message to create a group comprising at least one member;
transmitting an indication to the at least one member based at least in part on the created group, wherein the indication comprises a custom operation uniform resource indicator (URI) that is indicative of information associated with the at least one member of the created group;
transmitting, to the at least one member of the group, the custom operation URI; and
transmitting, to the second network entity, a response message to the request message.

10. The method of claim 9, wherein the custom operation URI comprises a mapped hypertext transfer protocol (HTTP) POST request.

11. The method of claim 9, wherein the custom operation URI comprises one or more of an identifier of the group, an identifier of the at least one member of the group, or a cause for creating the group.

12. The method of any of claims 9 to 11, wherein:
the first network entity comprises an artificial intelligence/machine learning (AI/ML) enablement (AIMLE) server; and
the second network entity comprises an AIML server or a vertical application layer (VAL) server.

13. The method of any of claims 9 to 12, wherein the at least one member of the group is selected for an artificial intelligence/machine learning (AI/ML) task.

14. A second network entity, comprising:
at least one memory; and
at least one processor coupled with the at least one memory and configured to cause the second network entity to:
receive, from a first network entity, a request message comprising a custom operation uniform resource identifier (URI), wherein the custom operation URI is indicative of information associated with the second network entity.

15. A method performed by a second network entity, the method comprising:
receiving, from a first network entity, a request message comprising a custom operation uniform resource identifier (URI), wherein the custom operation URI is indicative of information associated with the second network entity, and wherein the custom operation URI comprises a mapped hypertext transfer protocol (HTTP) POST request.
